# EUROPÄISCHE PATENTSCHRIFT

(11) **EP 2 241 936 B1**
(45) Veröffentlichungstag und Bekanntmachung des Hinweises auf die Patenterteilung: **19.10.2011**
(21) Anmeldenummer: 10156034.0
(22) Anmeldetag: 10.03.2010
(51) Int. Cl.: G03B 37/00, F16L 55/26

(54) **Inspektionskamera für Rohrsysteme**
Inspection camera for tubes
Caméra d'inspection des tubes

(30) Priorität: 14.04.2009 DE 102009017008
(43) Veröffentlichungstag der Anmeldung: 20.10.2010
(73) Patentinhaber: Kummert, Bernhard, 97447 Gerolzhofen (DE)
(72) Erfinder: Kummert, Bernhard, 97447 Gerolzhofen (DE)
(74) Vertreter: von den Steinen, Axel

(56) Entgegenhaltungen:
- EP-A2- 0 504 591
- DE-A1- 4 202 138
- DE-A1- 19 641 887
- DE-C1- 19 746 347
- DE-U1- 29 500 127
- DE-U1- 29 604 865
- US-A1- 2005 275 725

## Beschreibung

Die Erfindung betrifft eine Inspektionskamera zur Inspektion insbesondere von Rohren oder Kanälen nach dem Oberbegriff des Anspruchs 1.

Gattungsgemäße Inspektionskameras werden beispielsweise, jedoch keineswegs ausschließlich, zur Inspektion von unzulänglichen Bereichen, beispielsweise in Rohren, Kanälen, Kaminen oder Ähnlichem benutzt. Die Steuerung der Inspektionskamera erfolgt dabei regelmäßig ferngesteuert, da der Bediener selbst in die unzulänglichen Bereiche nicht gelangen kann. Durch die Bildaufnahmen mittels des Kameraobjektivs kann ein visueller Überblick über den Zustand im Inneren des entsprechenden Bereichs, beispielsweise in einem Abwasserrohr oder in einem Abwasserkanal, ermöglicht werden. Der Begriff Kameraobjektiv soll dabei für das Verständnis der Erfindung dahingehend verstanden werden, dass es sich um eine optische Aufnahmeeinrichtung handelt, mit der Bilder aufgenommen und zur Auswertung bzw. Anzeige weitergeleitet werden können.

Die gattungsgemäßen Inspektionskameras sind außerdem durch eine Verstelleinrichtung charakterisiert, mit der das Kameraobjektiv relativ zum Vorschubstrang, an dem die Inspektionskamera befestigt ist, verstellt werden kann. Auf diese Weise kann die Blickrichtung des Kameraobjektivs durch entsprechende Verstellung der Verstelleinrichtung vom Benutzer verstellt werden, um unterschiedliche Bereiche in einem Rohr oder in einem Kanal oder in einem Kamin in Augenschein nehmen zu können, ohne dass sich der Standpunkt der Inspektionskamera selbst ändert.

Wünschenswert für den Betrieb solcher Inspektionskameras ist es, dass ein möglichst großer Bereich überblickt werden kann, ohne dass die Inspektionskamera selbst durch Bewegungen des Vorschubstrangs bewegt wird. Gemäß einem Lösungsansatz sind dazu in der Inspektionskamera mehrere Kameraobjektive eingebaut, die in jeweils unterschiedliche Blickrichtungen ausgerichtet sind. Eine solche Inspektionskamera beschreibt beispielsweise die DE 20 2004 016 828. Nachteilig an diesen Lösungen mit mehreren Kameraobjektiven in einer Inspektionskamera ist es, dass die Herstellkosten mit jedem zusätzlichen Kameraobjektiv signifikant ansteigen.

Außerdem sind aus dem Stand der Technik Inspektionskameras bekannt, bei denen der Kamerakopf mit dem darin befestigten Kameraobjektiv mehrachsig verstellt werden kann, um die Blickrichtung des Kameraobjektivs entsprechend mehrachsig ausrichten zu können. Eine solche Inspektionskamera wird beispielsweise von der DE 20 2007 017 822 beschrieben. Auch bei diesen mehrachsig verstellbaren Inspektionskameras besteht der Nachteil, dass für jede Stellachse, um die der Kamerakopf verschwenkt werden kann, ein eigener Verstellantrieb vorhanden sein muss, wodurch die Herstellungskosten wiederum signifikant erhöht werden.

Eine hierzu vergleichbare Lösung zeigt die Schrift DE 295 00 127 U1. Hierbei wird eine Rotationsvorrichtung mit einer Schwenkkopfkamera, wie diese z.B. in DE 296 04 865 U1 beschrieben ist, kombiniert. In diesem Falle kann mit der Rotationsvorrichtung in der Anordnung zwischen dem Vorschubstrang und der Schwenkkopfkamera diese um eine Längsachse geschwenkt werden. Zur Betrachtung der Rohrinnenwandung kann zudem über den Schwenkmechanismus um eine Querachse das Kameraobjektiv gegenüber der Längsachse geschwenkt werden.

Einen anderen Weg beschreitet die Schrift DE 42 02 138 A1. Hierbei wird zur Kontrolle von Brunnenschächten ein Kamerasystem an einem Seil herabgelassen. Um zum einen eine schnelle Orientierung im Brunnenschacht zu haben, aber zum anderen eine genaue Inspektion der Brunnenwand vornehmen zu können, wird vorgeschlagen das Kamerasystem über einen mehrdimensionalen Verstellmechanismus an die jeweilige Stelle in der Brunnenwand heranzufahren. Dieser Verstellmechanismus kann sowohl aus schräg angelenkten Seilzügen, über zwei rechtwinklig angeordnete Linearbewegungen oder eine Linearbewegung und eine Kreisbewegung realisiert werden.

Weiterhin sind aus dem Stand der Technik eine Vielzahl unterschiedlicher Kamerasysteme für jeweils verschiedenste Verwendungen bekannt. So ist es z. B. in der normalen Fotographie wünschenswert, wenn Bildaufnahmen immer parallel zum Horizont aufgenommen werden können. Zu diesem Zwecke stellt die Schrift US 2005/0275725 A1 zwei Lösungen vor, die sicherstellen, dass das verwendbare rechteckige Bild mit einer Waagerechten übereinstimmt.

Für den speziellen Anwendungsfall, dass nur ein kleiner Bereich innerhalb eines Rohres zu prüfen ist, zeigt die Schrift DE 196 41 887 A1 eine Inspektionskamera an einem Bearbeitungswerkzeug. In diesem Falle kann das Werkzeug an einem Vorschubstrang durch ein Rohr geschoben werden. Weiterhin kann das Werkzeug über eine rotatorische Verstellung um die Rohrachse gedreht werden. Zur Überwachung ist eine Kamera mit dem Werkzeug verbunden auf die Bearbeitungsstelle ausgerichtet.

Ausgehend von diesem Stand der Technik ist es deshalb Aufgabe der vorliegenden Erfindung, eine neue Inspektionskamera zur Inspektion insbesondere von Rohren oder Kanälen vorzuschlagen, mit der ein großer Bildbereich ohne Bewegung der Inspektionskamera durch Verstellung des Vorschubstrangs inspiziert werden kann, wobei die Inspektionskamera zugleich mit relativ einfachen Mitteln kostengünstig herstellbar ist. Weiter ist es Aufgabe der vorliegenden Erfindung ein Verfahren zum Betrieb dieser erfindungsgemäßen Inspektionskamera vorzuschlagen. Diese Aufgaben werden nach der Lehre der beiden unabhängigen Hauptansprüche gelöst.

Vorteilhafte Ausführungsformen der Erfindung sind Gegenstand der Unteransprüche.

Die erfindungsgemäße Inspektionskamera ist zunächst einmal dadurch charakterisiert, dass ein vorzugsweise starr oder elastisch mit dem Vorschubstrang verbundenes Trägerelement und ein an dem Trägerelement längsseitig befestigter Kamerakopf vorhanden sind. Um die Verstellung des Kameraobjektivs relativ zum Vorschubstrang zu ermöglichen, ist zwischen dem Trägerelement und dem Kamerakopf lediglich eine Verstelleinrichtung vorgesehen. Diese Verstelleinrichtung zeichnet sich dabei dadurch aus, dass sie in der Art eines Schwenkantriebs ausgebildet ist. Dieser Schwenkantrieb ermöglicht das Schwenken des Kamerakopfs um eine Rotationsachse relativ zum Trägerelement. Dies bedeutet mit anderen Worten, dass bei der erfindungsgemäßen Inspektionskamera lediglich ein einfacher Schwenkantrieb vorgesehen ist, mit dem der Kamerakopf relativ zum Trägerelement verschwenkt werden kann, so dass im Ergebnis eine Rotationsbewegung des Kameraobjektivs relativ zum Vorschubstrang ermöglicht wird. Diese Art eines einachsigen Schwenkantriebs ist relativ einfach zu realisieren und damit kostengünstig herstellbar.

Die erfindungsgemäße Inspektionskamera zeichnet sich weiterhin dadurch aus, dass die senkrecht auf der Abbildungsebene stehende Bildachse des Kameraobjektivs mit einem Neigungswinkel gegenüber der Rotationsachse der Verstelleinrichtung geneigt ist. Vereinfacht gesagt bedeutet dies, dass das Kameraobjektiv schräg in den Kamerakopf eingebaut wird und damit eine schräge Blickrichtung relativ zur Rotationsachse ermöglicht. Wird nun die Verstelleinrichtung rotatorisch angetrieben, so rotiert die Bildachse des Kameraobjektivs zusammen mit dem Kamerakopf um die Rotationsachse. Im Ergebnis wird es dadurch ermöglicht, dass der mit dem Kameraobjektiv aufnehmbare Bildbereich das gesamte Innere des aufzunehmenden Objekts, beispielsweise der Innenseite eines Rohrs, überstreicht.

Weiterhin ist vorgesehen, dass die geometrische Anordnung der Rotationsachse der Verstelleinrichtung relativ zur Längsachse der Inspektionskamera koaxial verläuft. Wenngleich auch eine andere Ausführung denkbar wäre, wird jedoch die Auswertbarkeit und Erkennbarkeit der mit dem Kameraobjektiv aufgenommenen Bilder hierdurch erheblich verbessert bzw. gewährleistet. Die Längsachse der Inspektionskamera wird dabei üblicherweise durch die Längsachse des gestreckten Vorschubstrangs definiert.

Welchen Aufbau das Kameraobjektiv in der Inspektionskamera hat, ist grundsätzlich beliebig. Zumindest wird das Kameraobjektiv im Wesentlichen aus einem elektronischen Bildsensor, beispielsweise einem CCD-Bildsensor, und einer vor dem Bildsensor angeordneten Objektivlinse gebildet.

Erfindungsgemäß ist nunmehr die Objektivlinse des Kameraobjektivs in der Art eines Weitwinkelobjektivs auszubilden, um einen möglichst großen Bildbereich vor dem Kameraobjektiv auf den hinter der Objektivlinse angeordneten Bildsensor abbilden zu können. Solche Weitwinkelobjektivlinsen sind dabei durch den jeweils abbildbaren Bildbereich charakterisiert, der durch den Bildsektor der Weitwinkelobjektivlinse definiert ist. Dieser Bildsektor wiederum wird durch den jeweiligen Bildwinkel definiert, der den Öffnungswinkel des Bildsektors zum abbildbaren Bildbereich beschreibt. Je größer der Bildwinkel des Bildsektors dabei ist, umso weiter entfernt liegen die Ränder des abbildbaren Bildbereichs. Der theoretisch maximale Bildwinkel liegt dabei knapp unter 180°.

Der Bildsektor muss hierzu einen Bildwinkel von mehr als 90° aufweisen. Auf diese Weise wird ein entsprechend großer abbildbarer Bildbereich vor dem Kameraobjektiv ermöglicht, so dass der Benutzer in jedem Schwenkwinkel des Kameraobjektivs sowohl einen ausreichenden Blick nach vorne als auch einen ausreichenden Blick zur Seite hat.

Aufgrund der schrägen Anordnung des Kameraobjektivs wird dabei zugleich ein Blick nach vorne als auch ein Blick zur Seite ermöglicht. Die Verwendung von mehreren Kameras bzw. der Einsatz mehrerer Verstelleinrichtungen kann auf diese Weise entfallen, ohne dass der mit dem Kameraobjektiv aufnehmbare Bildbereich blinde Flecken aufwiese.

Sobald das Kameraobjektiv im Kamerakopf befestigt ist, muss erfindungsgemäß hierzu der Bildsektor der Objektivlinse sowohl die Längsachse der Inspektionskamera als auch die Radialachse der Inspektionskamera einschließen. Auf diese Weise wird gewährleistet, dass die Aufnahmen der Inspektionskamera einen Blick genau in Richtung der Längsachse, d.h. genau nach vorne, und eine Blickrichtung radial zur Längsachse, d.h. seitlich zur Längsachse, ermöglichen. Reicht der Bildsektor sogar noch über die Radialachse der Inspektionskamera hinaus, so kann mit dem Kameraobjektiv auch ein Bereich mit Blickrichtung nach schräg hinten aufgenommen werden.

Mit welchen Neigungswinkeln das Kameraobjektiv schräg in den Kamerakopf eingebaut ist, ist grundsätzlich beliebig. Besonders vorteilhaft ist es, wenn der Neigungswinkel der Bildachse des Kameraobjektivs gegenüber der Rotationsachse der Verstelleinrichtung im Bereich zwischen 30° und 60° liegt. Durch einen solchen mittleren Neigungswinkel wird es nämlich ermöglicht, dass das Kameraobjektiv bei jedem Schwenkwinkel der Verstelleinrichtung sowohl nach vorne als auch zur Seite blicken kann. Wird ein Neigungswinkel von ungefähr 45° gewählt, so kann mit dem Kameraobjektiv gleichgewichtig sowohl nach vorne als auch zur Seite geblickt und entsprechende Bildbereiche aufgenommen werden.

Um unerwünschte Taumelbewegungen der mit dem Kameraobjektiv aufgenommenen Bilder zu vermeiden, die die Auswertung der Bilder erschweren, ist es besonders vorteilhaft, wenn die Rotationsachse der Verstelleinrichtung und die Bildachse der Inspektionskamera in einer Ebene liegen. Aufgrund des Neigungswinkels zwischen Rotationsachse und Bildachse und der Anordnung in einer Ebene ergibt es sich dann, dass sich die beiden Achsen in einem Schnittpunkt schneiden.

Wo der Schnittpunkt zwischen Rotationsachse und Bildachse geometrisch angeordnet ist, ist wiederum grundsätzlich beliebig. Besonders vorteilhaft ist es, wenn der Schnittpunkt von Rotationsachse und Bildachse in der Abbildungsebene des Kameraobjektivs liegt. Im Ergebnis wird dadurch gewährleistet, dass dieser Schnittpunkt zwischen Rotationsachse und Bildachse sich bei Rotation des Kamerakopfs nicht bewegt, sondern immer an einem Punkt der Abbildungsebene verbleibt, beispielsweise im Mittelpunkt des jeweils verwendeten Bildsensors. Dadurch wird wiederum die Auswertbarkeit der mit dem Kameraobjektiv aufgenommenen Bilder stark vereinfacht.

Der Bildsektor sollte bevorzugt einen Bildwinkel im Bereich zwischen 135° und 175° aufweisen. Somit kann die Grundaufgabe, zugleich die Radialachse mit Blick auf die Rohrwandung und die Längsachse mit Blick in das Rohr im Bildwinkel zu erfassen, vorteilhaft erfüllt wird.

Der Bildsensor im Kameraobjektiv selbst sollte bevorzugt aus einer Vielzahl von photoaktiven Zellen, die vielfach als Pixel bezeichnet werden, gebildet sein. Die einzelnen photoaktiven Zellen sind dabei in einer Bildebene angeordnet und können nach Zeilen und Spalten geordnet sein. Bekannte CCD-Bildsensoren weisen beispielsweise einen solchen Aufbau mit einer Vielzahl von photoaktiven Zellen auf, die eine rechteckförmige Bildebene bilden.

Wird ein Bildsensor mit einer Vielzahl von photoaktiven Zellen in einer Bildebene für den Aufbau des Kameraobjektivs in der Inspektionskamera verwendet, ergibt sich ein neuartiges Betriebsverfahren der erfindungsgemäßen Inspektionskamera. Dieses erfindungsgemäße Verfahren wird dadurch charakterisiert, dass nicht alle Bilddaten der in der Bildebene angeordneten photoaktiven Zellen angezeigt werden. Dies kann beispielsweise dadurch erreicht werden, dass lediglich ein Teil der photoaktiven Zellen angesprochen und die dort generierten Bilddaten ausgelesen werden. Alternativ dazu ist es auch denkbar, dass die Bilddaten aller photoaktiven Zellen zunächst ausgelesen werden, wobei ein Teil dieser Bilddaten anschließend nicht zur Auswertung bzw. zur Anzeige weitergeleitet wird. Durch diese Selektion der von den photoaktiven Zellen gelieferten Bilddaten ist es möglich, bestimmte Teilbildsektoren aus dem insgesamt vorhandenen Bildsektor des Kameraobjektivs auszuwählen. Wird nun die jeweils ausgewählte Teilmenge der Bilddaten variiert, kann durch die Variation der vom Kameraobjektiv aufgenommene Bildbereich bewegt werden, so dass im Ergebnis also durch die elektronischen Operationen eine virtuelle Schwenkbewegung realisiert wird.

Entsprechend kann durch geeignete Umrechung der von den photoaktiven Zellen gelieferten Bilddaten eine jeweils aufrechte Bilddarstellung des aufgenommenen Bildbereichs unabhängig vom Schwenkwinkel des Kamerakopfs relativ zum Trägerelement realisiert werden. Durch diese aufrechte Bilddarstellung wird die Auswertung der angezeigten Bilder für den Benutzer erheblich vereinfacht.

Eine Ausführungsform der Erfindung ist in den Zeichnungen schematisch dargestellt und wird nachfolgend beispielhaft erläutert.

Es zeigen:
- Fig. 1: eine schematisch dargestellte Inspektionskamera bei Verschwenken des Kamerakopfs in einen ersten Schwenkwinkel;
- Fig. 2: die Inspektionskamera gemäß Fig. 1 bei Verschwenken des Kamerakopfs in einen zweiten Schwenkwinkel;
- Fig. 3: die Inspektionskamera gemäß Fig. 2 bei einer ersten selektiven Auslesung der Bilddaten des elektronischen Bildsensors;
- Fig. 4: die Inspektionskamera gemäß Fig. 3 bei einer zweiten selektiven Auslesung der Bilddaten des elektronischen Bildsensors;
- Fig. 5: die Inspektionskamera gemäß Fig. 3 bei einer dritten selektiven Auslesung der Bilddaten des elektronischen Bildsensors.

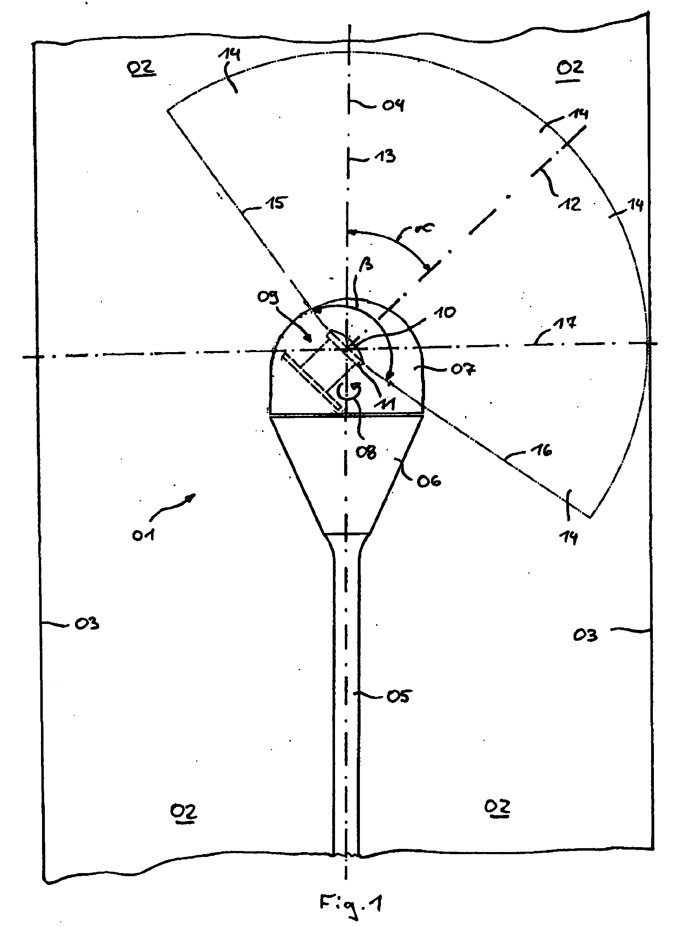

Fig. 1 zeigt eine Inspektionskamera 01 bei Inspektion eines unzugänglichen Bereichs 02 im Inneren eines Rohrs 03. Die Zeichnungen zeigen dabei lediglich die Bestandteile der Inspektionskamera 01, die für das Verständnis der Erfindung erforderlich sind. Die Inspektionskamera 01 erstreckt sich in Richtung einer Längsachse 04 und ist am vorderen Ende eines Vorschubstrangs 05 befestigt. Die Längsachse 04 der Inspektionskamera 01 verläuft dabei koaxial zur Mittelachse des Vorschubstrangs 05 in dessen gestreckte Form.

Die Inspektionskamera wird im Wesentlichen aus einem am Vorschubstrang 05 befestigten Trägerelement 06 und einem vor dem Trägerelement 06 angeordneten Kamerakopf 07 gebildet. Durch einen nicht dargestellten Rotationsantrieb kann der Kamerakopf 07 relativ zum Trägerelement 06 verschwenkt werden, wobei er gemäß dem Bewegungspfeil 08 um die Längsachse 04 der Inspektionskamera 01 rotiert. Im Kamerakopf 07 ist ein Kameraobjektiv 09 starr befestigt. Mit dem Kameraobjektiv 09 können Videobilder aufgenommen und über eine Videoleitung zu einer außerhalb des Rohrs 03 angeordneten Auswerte- und Anzeigeeinrichtung weitergeleitet werden.

Das Kameraobjektiv 09 beinhaltet eine Weitwinkelobjektivlinse 10 und einen dahinter liegenden elektronischen Bildsensor 11, der beispielsweise in der Art eines CCD-Videosensors ausgebildet sein kann.

Die Einbaulage des Kameraobjektivs 09 im Kamerakopf 07 wird durch die Bildachse 12 charakterisiert, die senkrecht auf der Bildebene des elektronischen Bildsensors 11 steht. Erfindungsgemäß ist die Bildachse 12 mit einem Neigungswinkel ά von beispielsweise 45° gegenüber der Rotationsachse 13 des Kamerakopfs 07 geneigt. Die Rotationsachse 13 verläuft dabei koaxial zur Längsachse 04.

Durch die Neigung der Bildachse 12 relativ zur Rotationsachse 13 kann durch das Verschwenken des Kamerakopfs 07 relativ zum Trägerelement 06 erreicht werden, dass der mit dem Kameraobjektiv 09 aufnehmbare Bildbereich den gesamten vor und seitlich des Kamerakopfs 07 liegenden Teil des Rohrs 09 überstreicht. Der mit dem Kameraobjektiv 09 aufnehmbare Bildbereich wird dabei durch den Bildsektor 14 der verwendeten Weitwinkelobjektivlinse 10 bestimmt. Die Grenzen des mit dem Kameraobjektiv 09 aufnehmbaren Bildbereichs liegen dabei in der Blickrichtung der Bildsektorgrenzen 15 und 16. Wie aus der schematisierten Darstellung in Fig. 1 ersichtlich ist, weist der Bildsektor 14 der Weitwinkelobjektivlinse 10 einen Bildwinkel β von ungefähr 160° auf, so dass im Ergebnis der Bildsektor 14 die Längsachse 04 der Inspektionskamera 01 und zugleich eine Radialachse 17, die senkrecht zur Längsachse 04 verläuft, einschließt. Im Ergebnis kann also durch die Verwendung der Weitwinkelobjektivlinse 10 mit dem Neigungswinkel ά von 45° und einem Bildwinkel β von 160° ein Bildbereich auf den Bildsensor 11 abgebildet werden, der gleichzeitig Bereiche seitlich und Bereiche vor dem Kamerakopf zeigt.

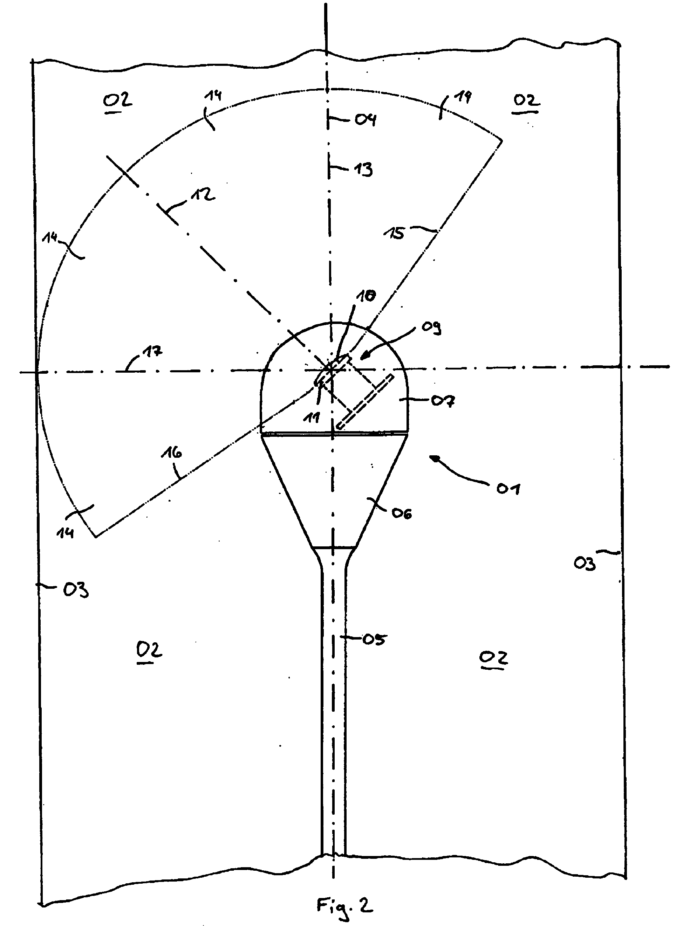

Fig. 2 zeigt die Inspektionskamera 01 nach Schwenken des Kamerakopfs um 180°. Man erkennt, dass dadurch, dass die Rotationsachse 13 die Bildachse 12 in einem Schnittpunkt schneidet, der in der Bildebene des elektronischen Bildsensors 11 liegt, gewährleistet wird, dass durch die Schwenkbewegung des Kamerakopfs keine unerwünschten Taumelbewegungen der mit dem Kameraobjektiv 09 aufgenommenen Bilder verbunden sind. Weiter kann aus Fig. 2 entnommen werden, dass durch das Verschwenken des Kamerakopfs 07 mit einem Schwenkwinkel von insgesamt 360° der gesamte Innenumfang des Rohrs 03 bei gleichzeitigem Blick entlang der Längsachse des Rohrs 03 aufgenommen werden kann, ohne dass die Inspektionskamera 01 durch Bewegung des Vorschubstrangs 05 oder durch eine andere Bewegung bewegt werden müsste.

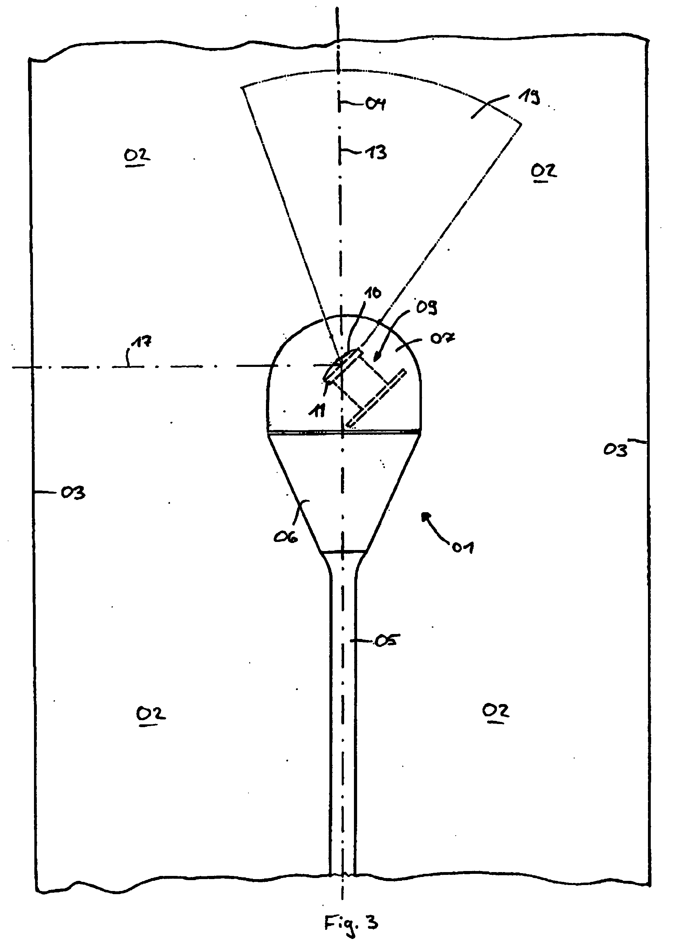

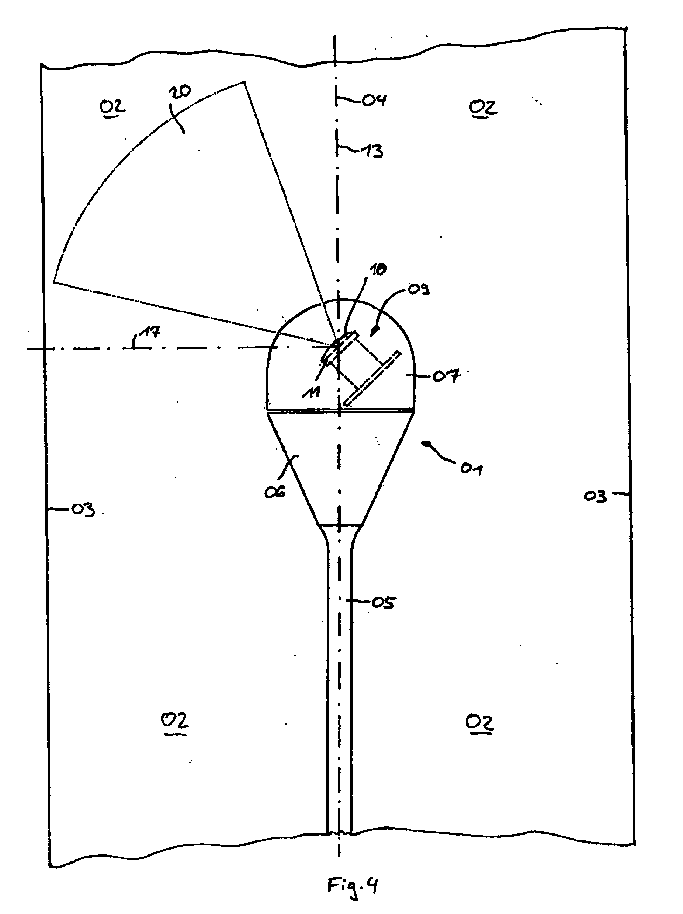

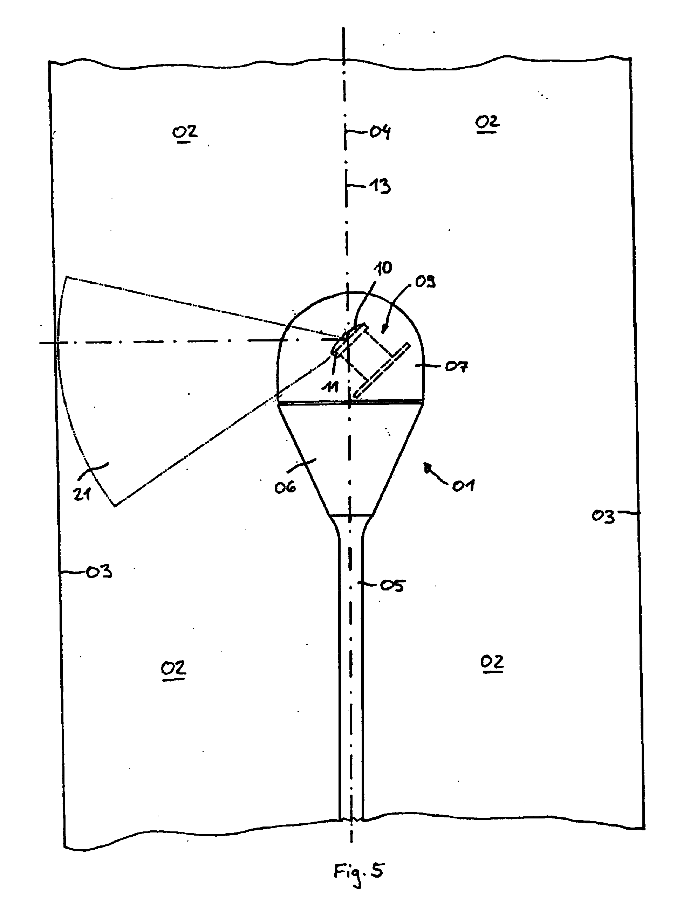

Fig. 3, Fig. 4 und Fig. 5 zeigen die Einsatzmöglichkeiten der erfindungsgemäßen Inspektionskamera 01 durch Einsatz eines neuen Verfahrens. Durch selektives Auslesen der Bilddaten der photoaktiven Zellen des elektronischen Bildsensors 11 kann der jeweils aufgenommene Bildbereich verschwenkt werden, ohne dass dazu eine mechanische Verstellung der Inspektionskamera 01 notwendig wäre. Werden, wie in Fig. 3 schematisch dargestellt, nur die auf der rechten Seite des elektronischen Bildsensors 11 liegenden photoaktiven Zellen des elektronischen Bildsensors 11 ausgelesen, so wird an der Anzeigeeinrichtung ein Bildbereich angezeigt, der in einem Teilbildsektor 19 liegt. Werden dagegen nur die in der Mitte des elektronischen Bildsensors 11 liegenden Zellen ausgelesen, so ergibt sich ein Bildbereich, der im Teilbildsektor 20 liegt. Werden, wie in Fig. 5 dargestellt, nur die auf der linken Seite des elektronischen Bildsensors 11 liegenden Zellen ausgelesen, so ergibt sich ein Bildbereich, der im Teilbildsektor 21 liegt. Im Ergebnis kann also der jeweils mit dem Kameraobjektiv aufgenommene Bildbereich durch selektives Auslesen der Bilddaten des elektronischen Bildsensors 11 virtuell verschwenkt werden, ohne dass dazu eine mechanische Verstellung in der Inspektionskamera notwendig ist.

## Patentansprüche

1. Inspektionskamera (01) zur Inspektion insbesondere von Rohren (03) oder Kanälen, wobei die Inspektionskamera (01) ein Trägerelement (06), einen Kamerakopf (07), ein starr im Kamerakopf (07) befestigtes Kameraobjektiv (09) und eine Verstelleinrichtung umfasst, wobei das Trägerelement (06) mit dem vorderen Ende eines Vorschubstrangs (05) verbunden ist, wobei mit dem Kameraobjektiv (09) Bildaufnahmen insbesondere im Inneren von Rohren (03) oder Kanälen gemacht werden können, und wobei das Kameraobjektiv (09) im wesentlichen aus einem elektronischen Bildsensor (11) und zumindest einer vor dem Bildsensor (11) angeordneten Objektivlinse (10) besteht, wobei die Verstelleinricbtung lediglich einem einfachen, einarchsigen, Schwenkantrieb umfasst, mit dem der Kamerakopf (07) um eine Rotationsachse (13) relativ zum Trägerelement (06) ferngesteuert verschwenkt und positioniert werden kann, wobei die Rotationsachse (13) mit der Längsachse (04) des gestreckten Vorschubstranges (05) ubereinstimmt, und wobei die senkrecht auf der Abbildungsebene stehende Bildachse (12) des Kameraobjektivs (09) mit einem Neigungswinkel (α) gegenüber der Rotationsachse (13) der Verstelleinrichtung geneigt ist
**dadurch gekennzeichnet,**
**dass** die Objektivlinse (10) in der Art einer Weitwinkelobjektivlinse ausgebildet ist, mit der ein in einem weitwinkeligen Bildsektor (14) liegender Bildbereich auf die Abbildungsebene des Kameraobjektivs (09) abgebildet werden kann, wobei die Größe des auf die Abbildungsebene des Kameraobjektivs (09) abbildbaren Bildbereichs durch einen Bildwinkel (β) des Bildsektors (14) definiert wird, wobei der Bildwinkel (β) mehr als 90° aufweist, und wobei der Bildsektor (14) die Längsachse (04) und eine zur Rotationsachse (13) senkrechte Radialachse (17) einschließt.

2. Inspektionskamera nach Anspruch 1,
**dadurch gekennzeichnet,**
**dass** der Neigungswinkel (α) der Bildachse (12) des Kameraobjektivs (09) gegenüber der Rotationsachse (13) der Verstelleinrichtung im Bereich zwischen 30° und 60° liegt, insbesondere dass der Neigungswinkel (α) der Bildachse 45° beträgt.

3. Inspektionskamera nach Anspruch 1 oder 2,
**dadurch gekennzeichnet,**
**dass** der auf die Abbildungsebene des Kameraobjektivs (09) abbildbare Bildsektor (14) einen Bildwinkel (β) im Bereich zwischen 135° und 175° aufweist.

4. Inspektionskamera nach einem der Ansprüche 1 bis 3,
**dadurch gekennzeichnet,**
**dass** der Bildsensor (11) aus einer Vielzahl von photoaktiven Zellen gebildet ist, die in der Bildebene angeordnet sind.

5. Verfahren zum Betrieb einer Inspektionskamera (01) nach Anspruch 4,
**dadurch gekennzeichnet,**
**dass** aus der Gesamtheit der von den photoaktiven Zellen des Bildsensors (11) gelieferten Bilddaten zumindest eine Teilmenge selektiert wird, die die Abbildung eines Teilbildsektors (19, 20, 21) auf den Bildsensor (11) darstellt.

6. Verfahren nach Anspruch 5,
**dadurch gekennzeichnet,**
**dass** die Lage und/oder Größe des dargestellten Teilbildsektors (19, 20, 21) durch Variation der aus der Gesamtheit der Bilddaten selektierten Teilmenge verändert wird.

7. Verfahren nach Anspruch 6,
**dadurch gekennzeichnet,**
**dass** der Teilbildsektor (19, 20, 21) durch Variation der aus der Gesamtheit der Bilddaten selektierten Teilmenge verschwenkt wird.

8. Verfahren nach einem der Ansprüche 5 bis 7,
**dadurch gekennzeichnet,**
**dass** bei Änderung des Schwenkwinkels zwischen dem Kamerakopf (07) und dem Trägerelement (06) Rechenoperationen zur Umrechnung der von den photoaktiven Zellen gelieferten Bilddaten durchgeführt werden, wobei durch die Umrechnung eine aufrechte Bilddarstellung des Bildbereichs unabhängig vom Schwenkwinkel realisiert wird.

## Claims

1. Inspection camera (01) in particular for inspecting pipes (03) or sewers, wherein the inspection camera (01) comprises a carrier element (06), a camera head (07), a camera objective (09) being rigidly fastened in the camera head (07) and an adjustment device, wherein the carrier element (06) is connected with the frontal end of a heading rod (05), wherein the camera objective lens (09) enables image acquisition in particular in the interior of pipes (03) or sewers, and wherein the camera objective (09) is essentially composed of an electronic image sensor (11) and at least one objective lens (10) being disposed upstream of the image sensor (11), wherein the adjustment device comprises merely a simple uniaxial swivel drive by means of which the camera head (07) can be swiveled and positioned in a remote-controlled manner relative to the carrier element (06) about a rotational axis (13), wherein the rotational axis (13) corresponds to the longitudinal axis (04) of the elongated heading rod (05), and wherein the image axis (12) of the camera objective (09) being vertically disposed on the imaging plane is inclined at an inclination angle (α) with respect to the rotational axis (13) of the adjustment device,
**characterized in that**
the objective lens (10) is designed as a wide-angle type objective lens permitting the representation of an image area, which is contained in a wide-angle image sector (14), on the imaging plane of the camera objective (09), wherein the dimension of the image area, which can be represented on the imaging plane of the camera objective (09), is defined by an image angle (β) of the image sector (14), wherein the image angle (β) is greater than 90°, and wherein the image sector (14) encloses the longitudinal axis (04) and a radial axis (17) being disposed perpendicularly to the rotational axis (13).

2. Inspection camera according to Claim 1,
**characterized in that**
the inclination angle (α) of the image axis (12) of the camera objective (09) is in a range between 30° and 60° with respect to the rotational axis (13) of the adjustment device, in particular the inclination angle (α) of the image axis is 45°.

3. Inspection camera according to Claim 1 or 2,
**characterized in that**
the image sector (14) which can be represented on the imaging plane of the camera objective (09) exhibits an image angle (β) in a range between 135° and 175°.

4. Inspection camera according to any of Claims 1 to 3,
**characterized in that**
the image sensor (11) is composed of a plurality of photoactive cells which are disposed in the imaging plane.

5. Method for operating an inspection camera (01) according to Claim 4,
**characterized in that**
at least one subset is selected from the entire image dataset provided by the photoactive cells of the image sensor (11), said subset constituting the representation of a partial image sector (19, 20, 21) on the image sensor (11).

6. Method according to Claim 5,
**characterized in that**
the position and/or the dimension of the represented partial image sector (19, 20, 21) is altered by variation of the subset selected from the entire image dataset.

7. Method according to Claim 6,
**characterized in that**
the partial image sector (19, 20, 21) is swiveled by variation of the subset selected from the entire image dataset.

8. Method according to any of Claims 5 to 7,
**characterized in that**
when the swivel angle between the camera head (07) and the carrier element (06) is altered, computing operations for converting the image data provided by the photoactive cells are executed, wherein the conversion makes it possible to realize an upright image representation of the image area independently of the swivel angle.

## Revendications

1. Caméra d'inspection en particulier (01) pour l'inspection de tubes (03) ou d'égouts, la caméra d'inspection (01) comprenant un élément porteur (06), une tête de caméra (07), un objectif de caméra (09) étant rigidement fixé dans la tête de caméra (07) et un dispositif d'ajustage, l'élément porteur (06) étant raccordé à l'extrémité antérieure d'une tige d'avancement (05), l'objectif de caméra (09) permettant la prise d'images, en particulier à l'intérieur de tubes (03) ou d'égouts, l'objectif de caméra (09) étant essentiellement composé d'un capteur d'image (11) électronique et d'au moins une lentille d'objectif (10) étant agencée en amont du capteur d'image (11), le dispositif d'ajustage comprenant seulement un simple entraînement pivotant uniaxe permettant à la tête de caméra (07) d'être pivotée et positionnée de manière télécommandée relatif à l'élément porteur (06) autour d'un axe de rotation (13), l'axe de rotation (13) correspondant avec l'axe longitudinal (04) de la tige d'avancement (05) allongée, l'axe d'image (12) de l'objectif de caméra (09) disposé verticalement sur le plan de représentation étant incliné avec un angle d'inclinaison (α) par rapport à l'axe de rotation (13) du dispositif d'ajustage,
**caractérisé en ce que**
la lentille d'objectif (10) est conçue en forme d'une lentille d'objectif du type grand angle permettant la représentation d'une zone d'image comprise dans un secteur d'image (14) à grand angle sur le plan de représentation de l'objectif de caméra (09), la dimension de la zone d'image qui peut être représentée sur le plan de représentation de l'objectif de caméra (09) étant définie par un angle d'image (β) du secteur d'image (14), l'angle d'image (β) étant plus grand que 90°, et le secteur d'image (14) entourant l'axe longitudinal (04) et un axe radial (17) perpendiculaire à l'axe de rotation (13).

2. Caméra d'inspection selon la revendication 1,
**caractérisé en ce que**
l'angle d'inclinaison (α) de l'axe d'image (12) de l'objectif de caméra (09) est de l'ordre de 30° à 60° par rapport à l'axe de rotation (13) du dispositif d'ajustage, en particulier l'angle d'inclinaison (α) de l'axe d'image est de l'ordre de 45°.

3. Caméra d'inspection selon la revendication 1 ou 2,
**caractérisé en ce que**
le secteur d'image (14) qui peut être représenté sur le plan de représentation de l'objectif de caméra (09) présente un angle d'image (β) dans l'ordre de 135° à 175°.

4. Caméra d'inspection selon l'une quelconque des revendications 1 à 3,
**caractérisé en ce que**
le capteur d'image (11) est composé d'une pluralité de cellules photo-actives qui sont disposées dans le plan de représentation.

5. Procédé pour l'opération d'une caméra d'inspection (01) selon la revendication 4,
**caractérisé en ce qu'**
au moins un sous-ensemble est sélectionné parmi l'ensemble des données d'image fournies par les cellules photo-actives du capteur d'image (11), ledit sous-ensemble constituant la représentation d'un secteur d'image partielle (19, 20, 21) sur le capteur d'image (11).

6. Procédé selon la revendication 5,
**caractérisé en ce que**
la position et/ou la dimension du secteur d'image partielle (19, 20, 21) représenté est/sont modifiée/s par variation du sous-ensemble sélectionné parmi l'ensemble des données d'image.

7. Procédé selon la revendication 6,
**caractérisé en ce que**
le secteur d'image partielle (19, 20, 21) est pivoté par variation du sous-ensemble sélectionné parmi l'ensemble des données d'image.

8. Procédé selon l'une quelconque des revendications 5 à 7,
**caractérisé en ce que**
lorsque l'angle pivotant entre la tête de caméra (07) et l'élément porteur est changé, des opérations de calcul sont exécutées pour la conversion des données d'image fournies par les cellules photo-actives, ladite conversion réalisant une représentation d'image droite de la zone d'image indépendamment de l'angle pivotant.
